(19) Europäisches Patentamt
European Patent Office
Office européen des brevets

(11) **EP 4 289 885 A1**

(12) **EUROPEAN PATENT APPLICATION**
published in accordance with Art. 153(4) EPC

(43) Date of publication:
**13.12.2023 Bulletin 2023/50**

(21) Application number: **21924837.4**

(22) Date of filing: **14.12.2021**

(51) International Patent Classification (IPC):
*C08J 3/20* $^{(2006.01)}$     *C08K 3/013* $^{(2018.01)}$
*C08K 3/34* $^{(2006.01)}$     *C08K 5/098* $^{(2006.01)}$
*C08K 9/04* $^{(2006.01)}$     *C08L 23/00* $^{(2006.01)}$

(52) Cooperative Patent Classification (CPC):
C08J 3/20; C08K 3/013; C08K 3/34; C08K 5/098;
C08K 9/04; C08L 23/00

(86) International application number:
**PCT/JP2021/045958**

(87) International publication number:
**WO 2022/168452 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2021 JP 2021016691**

(71) Applicant: **Sumitomo Chemical Company, Limited
Chuo-ku
Tokyo 103-6020 (JP)**

(72) Inventors:
• **YAMADA, Hidekazu
  Ichihara-shi, Chiba 299-0195 (JP)**
• **IGAWA, Nao
  Ichihara-shi, Chiba 299-0195 (JP)**
• **ITO, Eiko
  Ichihara-shi, Chiba 299-0195 (JP)**

(74) Representative: **Vossius & Partner
Patentanwälte Rechtsanwälte mbB
Siebertstraße 3
81675 München (DE)**

(54) **METHOD FOR PRODUCING RESIN COMPOSITION, AND RESIN COMPOSITION**

(57)     An object is to provide a method for producing a resin composition capable of obtaining a film including a filler and excellent in appearance, and a resin composition.

A method for producing a resin composition according to the present invention is a method for producing a resin composition including: an olefin-based polymer; an inorganic filler; and a lubricant, in which the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg. The method includes: a step (1) of mixing the inorganic filler and a lubricant; a step (2) of mixing a mixture obtained in the step (1) and the olefin-based polymer; and a step (3) of kneading a mixture obtained in the step (2).

# Fig.1

SU8000 10.0kV 14.8mm x1.00k YAGBSE          50.0μm

**Description**

FIELD

The present invention relates to a method for producing a resin composition, and a resin composition.

BACKGROUND

In May 2019, the Ministry of the Environment of Japan formulated the "Resource Circulation Strategy for Plastics", in which effective use of 100% of used plastics by, for example, reuse and recycling by 2035 has been clearly stated. In such social situations, demands for resin packaging materials suitable for material recycling are expected to further increase.

Conventionally, multilayer films each having a base film and a sealant film layered on each other have been widely used as various packaging materials. The films configured as above each have the base film with high rigidity and high heat resistance, and the sealant film with heat-sealing performance at low temperatures, thereby enabling excellent functions to be exhibited as various packaging materials.

There has recently been a growing demand for recycling the films of this type, and the use of mono-materials has been required. Specifically, it is considered suitable to employ, as the base film, an olefin-based resin of the same type as the olefin-based resin such as polypropylene or polyethylene used for the sealant film.

For such a base film, there are some cases where a filler is included for the purpose of imparting various functions, such as increasing rigidity, to the film. For example, Patent Literature 1 discloses that a resin composition including a resin and a masterbatch made of a filler having a specific particle size is used for molding to obtain a molded article excellent in rigidity.

CITATION LIST

Patent Literature

Patent Literature 1: JP 2003-171472 A

SUMMARY

Technical Problem

However, a film including a filler has a problem in that it has inferior appearance due to defects (fisheyes) resulting from a filler aggregate.

The present invention has been conceived in view of such problems, it is an object to provide a method for producing a resin composition capable of obtaining a film including a filler and excellent in appearance, and a resin composition.

Solution to Problem

A method for producing a resin composition according to the present invention is a method for producing a resin composition including: an olefin-based polymer; an inorganic filler; and a lubricant, in which the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg, the method includes a step (1) of mixing the inorganic filler and the lubricant; a step (2) of mixing a mixture obtained in the step (1) and the olefin-based polymer; and a step (3) of kneading a mixture obtained in the step (2).

A resin composition according to the present invention includes: an olefin-based polymer; an inorganic filler; and a lubricant, in which the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg, the resin composition satisfying a formula (i) below:

$$0.10 \le FD/Ash \le 1.30 \text{ (i)}$$

(where:

FD represents a filler dispersity calculated by a formula (ii) below.
Ash represents a ratio of ash content to the resin composition.)

$$FD = D2 / D1 \text{ (ii)}$$

(where:

D1 represents an average value of distances between centers of gravity of bright portions of a processed image obtained by binarization processing of a reflection electron microscope image in MD cross section of the resin composition.
D2 represents a standard deviation of the distances between the centers of gravity of the bright portions of the processed image obtained by binarization processing of the reflection electron microscope image in MD cross section of the resin composition.)

Advantageous Effects of Invention

According to the present invention, it is possible to provide a method for producing a resin composition capable of obtaining a film including a filler and excellent in appearance, and a resin composition.

BRIEF DESCRIPTION OF DRAWINGS

Fig. 1 is a reflection electron microscope image of a cross section of a pellet of a resin composition in Example 1.
Fig. 2 is a reflection electron microscope image of a cross section of a pellet of a resin composition in Comparative Example 1.

DESCRIPTION OF EMBODIMENTS

Hereinafter, a description will be given on embodiments of the present invention, but the present invention is not limited to the following embodiments.

[Method for producing resin composition]

A method for producing a resin composition according to this embodiment is a method for producing a resin composition including: an olefin-based polymer; an inorganic filler; and a lubricant, in which the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg, the method including: a step (1) of mixing the inorganic filler and the lubricant; a step (2) of mixing a mixture obtained in the step (1) and the olefin-based polymer; and a step (3) of kneading a mixture obtained in the step (2).
Hereinafter, a description will be given on each component used for the method for producing the resin composition according to this embodiment, followed by a description on the method for producing the resin composition.

(Olefin-based polymer)

The olefin-based polymer is at least one polymer selected from the group consisting of a propylene-based polymer and an ethylene-based polymer having a melt flow rate of 0.5 g / 10 minutes or more measured at a temperature of 190 °C and a load of 2.16 kg.
The ethylene-based polymer is a polymer including 50 mol% or more of a structural unit derived from ethylene, and includes preferably 70 mol% or more, more preferably 97 mol% or more, further preferably 98 mol% or more, particularly preferably 99 mol% or more of the structural unit derived from ethylene. Further, the ethylene-based polymer can include 100 mol% of the structural unit derived from ethylene. That is, the ethylene-based polymer can be an ethylene homopolymer. The ethylene-based polymer including 70 mol% or more of the structural unit derived from ethylene can increase film deposition stability, and produces an effect of imparting rigidity to the film. The ethylene-based polymer can include two or more of the ethylene-based polymers to be described later in combination. In this case, at least one of the two or more ethylene-based polymers preferably includes 70 mol% or more of the structural unit derived from ethylene as the ethylene-based polymer. When the ethylene-based polymer including 70 mol% or more of the structural unit derived from ethylene and other ethylene-based polymer(s) are used in combination, the content of the ethylene-based polymer including 70 mol% or more of the structural unit derived from ethylene is preferably 60 mass % or more, more preferably 80 mass % or more, based on 100 mass % of the total of the two or more ethylene-based polymers. Films can be suitably formed when the content of the ethylene-based polymer including 70 mol% or more of the structural unit derived from ethylene is 90 mass % or more.

The term "structural unit" found in, for example, "structural unit derived from ethylene" herein refers to the polymerization unit of the monomer. Thus, the "structural unit derived from ethylene" for example means such a structural unit as - $CH_2CH_2$-.

The content (in mol%) of the structural unit derived from ethylene that is included in the ethylene-based polymer can be measured by, for example, the FT-IR method or the NMR method.

Examples of the ethylene-based polymer include a high pressure low-density polyethylene, a high-density polyethylene, an ethylene-$\alpha$-olefin copolymer, an ethylene-vinyl ester copolymer, and an ethylene-unsaturated carboxylic acid ester copolymer. Among these, the ethylene-based polymer is preferably an ethylene-$\alpha$-olefin copolymer and/or a high-density polyethylene, more preferably an ethylene-$\alpha$-olefin copolymer.

When the ethylene-based polymer is an ethylene-$\alpha$-olefin copolymer, examples of the $\alpha$-olefin having 3 to 20 carbon atoms used for the constituent unit of the ethylene-$\alpha$-olefin copolymer include propylene, 1-butene, 1-pentene, 1-hexene, 1-heptene, 1-octene, 1-nonene, 1-decene, 1-dodecene, 4-methyl-1-pentene, and 4-methyl-1-hexene. Among these, the $\alpha$-olefin having 3 to 20 carbon atoms is preferably 1-butene, and/or 1-hexene. These can be individually used, or two or more of them can be used in combination.

Examples of the ethylene-$\alpha$-olefin copolymer include an ethylene-propylene copolymer, an ethylene-1-butene copolymer, an ethylene-1-hexene copolymer, an ethylene-1-octene copolymer, an ethylene-1-butene-1-hexene copolymer, and an ethylene-1-butene-1-octene copolymer. Among these, the ethylene-$\alpha$-olefin copolymer is preferably an ethylene-1-butene copolymer, an ethylene-1-hexene copolymer, or an ethylene-1-butene-1-hexene copolymer. These can be individually used, or two or more of them can be used in combination.

Examples of a method for producing the ethylene-$\alpha$-olefin copolymer include a producing method by a known polymerization method using a known radical polymerization catalyst or a known ionic polymerization catalyst. Examples of the known catalyst include a peroxide catalyst, a Ziegler-Natta-based catalyst, and a metallocene-based catalyst. Examples of the known polymerization method include a solution polymerization method, a slurry polymerization method, a high pressure ionic polymerization method, a high pressure radical polymerization method, and a gas phase polymerization method.

Examples of the Ziegler-Natta-based catalyst include a catalyst composed of an organometallic compound and a solid catalyst component for olefin polymerization including a titanium atom, a magnesium atom, or a halogen atom. More specifically, examples thereof include catalysts described in JP H11-322833 A.

Examples of the metallocene-based catalyst include the following catalysts (A) to (D):

(A) A catalyst composed of a component including a transition metal compound having a group with a cyclopentadiene skeleton and a component including an alumoxane compound;
(B) A catalyst composed of the component including the transition metal compound and an ionic compound such as tritylborate or anilinium borate;
(C) A catalyst composed of the component including the transition metal compound, the component including the ionic compound, and a component including an organometallic compound; and
(D) A catalyst obtained by each of the above components carried by or impregnated with an inorganic particulate carrier such as $SiO_2$ or $Al_2O_3$, or a particulate polymer carrier such as an olefin-based polymer, e.g., ethylene or styrene. Examples of the above organometallic compound include butyllithium, and triethyl aluminum.

The ethylene-$\alpha$-olefin copolymer is preferably an ethylene-$\alpha$-olefin copolymer produced by a gas phase polymerization method using a metallocene-based catalyst. Specific examples of the ethylene-$\alpha$-olefin copolymer include the ethylene-$\alpha$-olefin copolymers described in JP H9-183816 A.

When the ethylene-based polymer is a high-density polyethylene, examples of the producing method therefor include a producing method in which ethylene and an $\alpha$-olefin having 3 to 12 carbon atoms are polymerized by a known polymerization method using a known catalyst. Examples of the known catalyst include the Ziegler-Natta-based catalyst. Examples of the known polymerization method include a gas phase-solid phase polymerization method, a liquid phase-solid phase polymerization method, and a homogeneous liquid phase polymerization method in the presence or absence of a solvent. The polymerization temperature is generally 30 °C to 300 °C. The polymerization pressure is generally ordinary pressure to 3000 kg/cm$^2$.

Other ethylene-based polymers such as a high pressure low-density polyethylene, an ethylene-vinyl ester copolymer, and an ethylene-unsaturated carboxylic acid ester copolymer can each be produced by a known producing method, or a commercially available product thereof can be used.

The density of the ethylene-based polymer is measured according to the method A described in JIS K7112-1980 after being subjected to the annealing process defined in JIS K6760-1995.

The density of the ethylene-based polymer is preferably 930 kg/m$^3$ or more, more preferably 935 kg/cm$^3$ or more, in terms of increasing the rigidity of the film. It is also preferably 970 kg/m$^3$ or less, more preferably 960 kg/m$^3$ or less, in terms of increasing filler acceptability and increasing the processing stability of the film.

The melt flow rate (MFR) of the ethylene-based polymer is measured according to JIS K7210-1-2014 at a temperature of 190 °C and a load of 2.16 kg.

The MFR of the ethylene-based polymer is 0.5 g / 10 minutes or more, and is preferably 0.5 g / 10 minutes to 25 g / 10 minutes, more preferably 1 g / 10 minutes to 15 g / 10 minutes, in terms of, for example, fisheyes, fluidity, the appearance of the film surface, and tackiness. Further, the MFR of the ethylene-based polymer is preferably 25 g / 10 minutes or less, more preferably 15 g / 10 minutes or less, in terms of allowing the resin composition to include 20 mass % to 80 mass % or more of an inorganic filler to increase the strength of the film.

The propylene-based polymer is a polymer containing 50 mol% or more of a structural unit derived from propylene, and examples thereof include a propylene homopolymer, and a copolymer of ethylene and/or an $\alpha$-olefin having 4 to 10 carbon atoms and propylene.

In the copolymer of ethylene and/or an $\alpha$-olefin having 4 to 10 carbon atoms and propylene, the structural unit derived from ethylene and/or an $\alpha$-olefin having 4 to 10 carbon atoms is preferably 0.1 mol% to 50 mol%, and the structural unit derived from propylene is preferably 99.9 mol% to 50 mol%.

Examples of the $\alpha$-olefin having 4 to 10 carbon atoms include 1-butene, 1-pentene, 1-hexene, 4-methyl-1-pentene, 1-octene, and 1-decene. Among these, the $\alpha$-olefin having 4 to 10 carbon atoms is preferably 1-butene, 1-hexene, or 1-octene.

Examples of the copolymer of ethylene and/or the $\alpha$-olefin having 4 to 10 carbon atoms and propylene include: a random copolymer of propylene and ethylene; a random copolymer of propylene and the $\alpha$-olefin having 4 to 10 carbon atoms; a random copolymer of propylene, ethylene, and the $\alpha$-olefin having 4 to 10 carbon atoms; and a propylene block copolymer. These can be individually used, or can be formed into a mixture of two or more kinds thereof. Further, the propylene-based polymer can be a mixture of a propylene homopolymer and a copolymer of ethylene and/or the $\alpha$-olefin having 4 to 10 carbon atoms and propylene.

Examples of the random copolymer of propylene and the $\alpha$-olefin having 4 to 10 carbon atoms include a propylene-1-butene random copolymer, a propylene-1-hexene random copolymer, a propylene-1-octene random copolymer, and a propylene-1-decene random copolymer.

Examples of the random copolymer of propylene, ethylene, and the $\alpha$-olefin having 4 to 10 carbon atoms include a propylene-ethylene-1-butene random copolymer, a propylene-ethylene-1-hexene random copolymer, a propylene-ethylene-1-octene random copolymer, and a propylene-ethylene-1-decene random copolymer.

The propylene-based polymer can be produced by a known polymerization method using a known polymerization catalyst of an olefin.

Examples of the polymerization catalyst include: a Ziegler type catalyst system; a Ziegler-Natta type catalyst system; a catalyst system composed of a transition metal compound of group 4 in the periodic table having a cyclopentadienyl ring and alkylaluminoxane, or a catalyst system composed of a transition metal compound of group 4 in the periodic table having a cyclopentadienyl ring and a compound that reacts therewith to form an ionic complex, and an organoaluminum compound; and a catalyst system obtained by carrying a catalyst component such as a transition metal compound of group 4 in the periodic table having a cyclopentadienyl ring, a compound that forms an ionic complex, and an organoaluminum compound on inorganic particles such as silica or clay mineral for modification. A prepolymerization catalyst prepared by preliminarily polymerizing ethylene and an $\alpha$-olefin in the presence of the above catalyst systems can also be used.

The MFR of the propylene-based polymer is measured according to JIS K7210-1-2014 at a temperature of 230 °C and a load of 2.16 kg. The MFR of the propylene homopolymer is preferably 0.1 g / 10 minutes to 50 g / 10 minutes, more preferably 0.5 g / 10 minutes to 20 g / 10 minutes. The MFR of the copolymer of ethylene and/or the $\alpha$-olefin having 4 to 10 carbon atoms and propylene is preferably 10 g / 10 minutes to 200 g / 10 minutes.

(Inorganic filler)

Examples of the inorganic filler include calcium carbonate, kaolin, metakaolin, hydrotalcite, mica, talc, and fibrous basic magnesium sulfate particles. Use of these inorganic fillers can prevent the transparency of the film from being impaired. In terms of further increasing the rigidity of the film, the inorganic filler is preferably hydrotalcite, talc, or fibrous basic magnesium sulfate particles, more preferably talc. The inorganic filler can also be carbon fibers. These inorganic fillers can be individually used, or two or more of them can be used in combination. The inorganic filler can be subjected to surface treatment with, for example, a coupling agent. In addition, a coloring pigment such as titanium oxide or iron oxide can be included as an inorganic filler.

The median diameter (d50) of the inorganic filler is not particularly limited, and can be 0.5 μm to 10 μm. The median diameter (d50) of the inorganic filler can be measured by a laser diffraction method as a volume-based median diameter.

When the inorganic filler is fibrous basic magnesium sulfate particles, the median diameter (d50) thereof is not particularly limited, and the particles can have a fiber length of 8 μm to 30 μm and a fiber diameter of 0.5 μm to 1.0 μm.

The content of the inorganic filler is preferably 20 mass parts to 80 mass parts, more preferably 30 mass parts to 70 mass parts, based on 100 mass parts of the total of the content of the olefin-based polymer and the content of the inorganic filler. When the content of the inorganic filler in the resin composition is 20 mass parts or more, a high rigidity and a high heat shrinkage resistance can be imparted to the film formed of the resin composition according to this embodiment. When the content of the inorganic filler in the resin composition is 80 mass parts or less, the resin composition can be successfully coextruded, and the film can be successfully molded.

(Lubricant)

Examples of the lubricant include: paraffin-based wax such as liquid paraffin, natural paraffin, microwax, polyethylene wax, chlorinated paraffin, fluorocarbon, or synthetic paraffin; fatty acid-based wax such as a stearic acid, a palmitic acid, a myristic acid, a behenic acid, or arachidin; aliphatic amide-based wax such as aliphatic amide or alkylene bis fatty acid amide; fatty acid lower alcohol esters such as butyl stearate; esters such as polyhydric alcohols, polyglycol esters, or higher alcohol esters; metallic soaps such as zinc stearate, magnesium stearate, calcium stearate, or ronozinc; polyhydric alcohols such as fatty alcohol, ethylene glycol, diethylene glycol, or triethylene glycol; and a partial ester of a fatty acid and a polyhydric alcohol or a partial ester of a fatty acid and a polygrlycol/polyglycerol. Among these, the lubricant is preferably zinc stearate or magnesium stearate. These lubricants can be individually used, or two or more of them can be used in combination.

The content of the lubricant is preferably 0.01 mass part to 5 mass parts, more preferably 0.05 mass parts to 3 mass parts, based on 100 mass parts of the total of the content of the olefin-based polymer and the content of the inorganic filler.

(Additive)

The resin composition according to this embodiment can include at least one additive as required, without impairing the object and effect of the present invention.

Examples of the additive include a stabilizer (antioxidant), a surfactant, an antistatic agent, a processability improver, an anti-blocking agent, and a dye.

Examples of the stabilizer include: phenol-based stabilizers such as 2,6-di-t-butyl-p-cresol (BHT), tetrakis[methylene-3-(3,5-di-t-butyl-4-hydroxyphenyl) propionate]methane (manufactured by BASF SE, IRGANOX (registered trademark) 1010), and n-octadecyl-3-(4'-hydroxy-3,5'-di-t-butylphenyl) propionate (manufactured by BASF SE, IRGANOX (registered trademark) 1076); and phophite-based stabilizers such as bis(2,4-di-t-butylphenyl) pentaerythritol diphosphite and tris(2,4-di-t-butylphenyl) phosphite.

Examples of the surfactant can include: anionic surfactants such as a carboxylate, a fatty acid salt, a cyclic fatty acid salt, a special polycarboxylate type active agent, a sulfonate, an alkyl or alkenyl sulfonate, an alkyl allyl sulfonate, a polycondensate of an alkyl allyl sulfonate, a sulfate, an alkyl sulfur acid ester, a polyoxyethylene-alkyl ether sulfate, a polyoxyethylene alkylphenylether sulfate, a phosphoric acid ester, an alkyl phosphoric acid ester, a polyoxyethylene-alkyl(phenyl)ether phosphoric acid ester salt, and an inorganic phosphoric acid salt; nonionic surfactants such as a polyoxyethylene derivative, a polyoxyethylene-alkyl ether, a polyoxyethylene-alkylphenyl ether, a polyoxyethylene-sorbitan fatty acid ester, a polyoxyethylene fatty acid ester, a polyoxyethylene-polyoxypropylene block polymer, a polyoxyethylene alkylamine, a polyoxyethylene alkyl amide, and a polyhydric alcohol-based derivative; cationic surfactants such as an alkylamine salt and a quaternary ammonium salt; amphoteric surfactants such as an alkylbetaine; fluorine-based surfactants; silicon-based surfactants; and reactive surfactants. The surfactants can be individually used, or two or more of them can be used in combination.

In addition, the resin composition according to this embodiment can include, as an additive, a polyolefin-based resin such as a low-density elastomer used for improving impact strength.

(Method for producing resin composition)

In the step (1), the inorganic filler and the lubricant are mixed together. The mixing method is not particularly limited, and for example, various blenders such as a Henschel mixer and a tumbler mixer can be used for dry blending. In the step (1), the mixing is completed when the inorganic filler and the lubricant are found not to be locally present. Specifically, the mixing is completed when the mixture of the inorganic filler and the lubricant is sampled at a plurality of locations for the measurement of its bulk density and the coefficient of variation of the measured bulk density is sufficiently small (e.g., 0.01 or less). The period for mixing can be appropriately changed depending on the amount of the mixture and the size of the equipment, and can be, for example, 5 minutes to 10 minutes.

In the step (2), the mixture obtained in the step (1) and an olefin-based polymer are mixed together. The mixing refers to simply mixing the mixture obtained in the step (1) and the olefin-based polymer together. The mixing method is not particularly limited, and for example, various blenders such as a Henschel mixer and a tumbler mixer can be used for dry blending. An olefin-based polymer molten in advance can also be used as the olefin-based polymer. When the resin composition according to this embodiment includes an additive, the additive can be dry-blended with the olefin-based polymer, or a masterbatch obtained by adding an additive to the olefin-based polymer can be dry-blended with the olefin-based polymer.

In the step (3), the mixture obtained in the step (2) is kneaded. The kneading refers to dispersing the inorganic filler in the olefin-based polymer. Examples of the kneading method include a method of melt-kneading and a method of shear-kneading with a stirring blade rotating at a high speed. In the method of melt kneading, various mixers such as a single-screw extruder, a twin-screw extruder, a Banbury mixer, and a heat roll can be used. When the olefin-based polymer molten in advance and the mixture obtained in the step (1) are mixed together in the step (2), the mixture obtained in the step (1) is for example fed through a side feeder provided in a melt-kneading machine for mixing with the olefin-based polymer, thereafter allowing the inorganic filler to be dispersed by melt-kneading.

[Resin Composition]

The resin composition according to this embodiment satisfies the following formula (i):

$$0.10 \leq \text{FD/Ash} \leq 1.30 \text{ (i)}$$

(where FD represents a filler dispersity calculated by the following formula (ii). Ash represents a ratio of ash content to the resin composition.)

$$\text{FD} = \text{D2} / \text{D1} \text{ (ii)}$$

(where D1 represents the average value of the distances between the centers of gravity of the bright portions of a processed image obtained by binarization processing of a reflection electron microscope image in MD cross section of the resin composition. D2 represents the standard deviation of the distances between the centers of gravity of the bright portions of the processed image obtained by binarization processing of the reflection electron microscope image in MD cross section of the resin composition.)

. The ash content is obtained by subjecting the resin composition to heat processing at a temperature of 800 °C for an hour. The ash content includes the inorganic filler. The ash content can include a trace amount of a catalyst residue in the olefin-based polymer. The filler dispersity and the ash content can be specifically determined by the respective methods described in Examples later.

The resin composition according to this embodiment can be used as a material for forming various kinds of films. The film made of the resin composition according to this embodiment can be suitably used, for example, as a packaging bag and a packaging container for storing a food, a detergent, a cosmetic product, or the like. A multilayer film can be formed by layering a film as a base film made of the resin composition according to this embodiment and a film as a sealant film made of the same kind of olefin-based polymer as that of the base film on each other, and the multilayer film thus formed can be suitably used as a mono-materialized packaging material that is reusable without separating the base film and the sealant film from each other. Further, the content of the inorganic filler in the resin composition according to this embodiment falling within the above range can impart a relatively high rigidity and a relatively high heat shrinkage resistance to the above multilayer film without the necessity to layer such a film as a polyethylene terephthalate (PET) film or a polyamide film on the film made of the resin composition as the base film.

The film made of the resin composition according to this embodiment can be collected and recycled after being used as, for example, containers for foods, detergents, or cosmetic products. The film can be recycled by, for example, cleaning the collected containers with a solvent or the like such as alcohol and drying, followed by melting the containers and forming them into pellets. The containers can be molten and formed into pellets without separating any layer of the multilayer film. The obtained pellets and a masterbatch of an ethylene-based polymer having a different content of the inorganic filler from that of the pellets can be mixed together and molten to adjust the concentration of the inorganic filler. The recycled resin material can be suitably used as, for example, a molding material for food, detergent, and cosmetic applications.

The method for producing the film using the resin composition according to this embodiment is not particularly limited but can be known methods for producing a film. Examples thereof include extrusion molding methods such as an inflation method using an inflation film manufacturing apparatus and a T-die method using a T-die cast film manufacturing apparatus. When the T-die method is used, the temperature of the processing resin is 180 °C to 300 °C, preferably 230 °C to 300 °C, and the temperature of a chill roll is 20 °C to 80 °C, preferably 20 °C to 50 °C.

The present invention is not limited to the aforementioned embodiments, and various modifications can be made within the scope of the claims. Embodiments obtainable in appropriate combination of the technical means that have respectively been disclosed in different embodiments are also included in the technical scope of the present invention.

EXAMPLES

Hereinafter, the present invention will be described further specifically by way of Examples. However, the present invention is not limited to these examples.

Methods for measuring various physical properties of the ethylene-based polymer are as follows.

<Content of structural unit derived from ethylene (unit: mol%)>

An IR spectrum measurement was performed using an IR measuring apparatus (manufactured by JASCO Corporation, trade name "FT-IR480") to measure the content of the structural unit derived from ethylene in the ethylene-based polymer.

Specifically, first, a 100 $\mu$m press sheet was prepared as a standard sample of an ethylene-hexene copolymer having a known number of methyl branches in 1000 carbons to measure the infrared absorption intensity of the standard sample using the above IR measuring apparatus 16 integrated times at a decomposition of 4 cm$^{-1}$. The absorption intensity at 1700 cm$^{-1}$ and the absorption intensity at 920 cm$^{-1}$ of the obtained IR spectrum were connected to each other to form a baseline. The peak absorption intensity (I1S) at 1378 cm$^{-1}$ and the peak absorption intensity (I2S) at 1303 cm$^{-1}$ for the obtained IR spectrum, and the absorption intensity (Io1S) at 1378 cm$^{-1}$ and the absorption intensity (Io2S) at 1303 cm$^{-1}$ for the baseline were read to determine a coefficient f using the equations below:

$$f = (\text{Number of methyl branches in 1000 carbons of standard sample}) / 0.67 ((K1S) - 0.95 (K2S) + 3.8)$$

$$K1S = \text{Log} (Io1S / I1S) / \text{Standard sample density (kg /m}^3) / \text{Sheet thickness (}\mu\text{m)}$$

$$K2S = \text{Log} (Io2S / I2S) / \text{Standard sample density (kg /m}^3) / \text{Sheet thickness (}\mu\text{m)}$$

In this measurement, the standard sample having a density of 925 kg/m$^3$ was used.

Next, a 100 $\mu$m press sheet was prepared as a sample having the unknown number of short-chain branches to measure the infrared absorption intensity of the sample using the above IR measuring apparatus 16 integrated times at a decomposition of 4 cm$^{-1}$. The absorption intensity at 1700 cm$^{-1}$ and the absorption intensity at 920 cm$^{-1}$ of the obtained IR spectrum were connected to each other to form a baseline. The peak absorption intensity (I1) at 1378 cm$^{-1}$ and the peak absorption intensity (I2) at 1303 cm$^{-1}$ for the obtained IR spectrum, and the absorption intensity (Io1) at 1378 cm$^{-1}$ and the absorption intensity (Io2) at 1303 cm$^{-1}$ for the baseline were read to determine the number of methyl branches in 1000 carbons ($CH_3$ / 1000C) using the equations below:

$$CH_3 / 1000C = 0.67 \times f \times ((K1) - 0.95 \times (K2) + 3.8)$$

$$K1 = \text{Log} (Io1 / I1) / \text{Sample density (kg/m}^3) / \text{Sheet thickness (}\mu\text{m)}$$

$$K2 = \text{Log} (Io2 / I2) / \text{Sample density (kg/m}^3) / \text{Sheet thickness (}\mu\text{m)}$$

The short-chain branching degree in 1000 carbons was set to a value obtained by multiplying the obtained $CH_3$ / 1000C by 0.60 when the short-chain branch is propylene; to a value obtained by multiplying the obtained $CH_3$ / 1000C by 1.13 when the short-chain branch is hexene; to a value obtained by multiplying the obtained $CH_3$ /1000C by 1.10 when the short-chain branch is octane; to a value obtained by multiplying the obtained $CH_3$ / 1000C by 0.62 when the short-chain branch is 4-methylpentene-1; to the value of the obtained $CH_3$ / 1000C when the short-chain branch is butene; and to a value obtained by multiplying the obtained $CH_3$ / 1000C by an appropriate coefficient in consideration of the structure of the short-chain branches when the short-chain branch is a compound other than propylene, hexane, octane, 4-methylpentene, or butene.

The content of the structural unit derived from ethylene included in the ethylene-based polymer was calculated by the following equation, using the short-chain branching degree in 1000 carbons:

$$\text{Content of structural unit derived from ethylene in ethylene polymer (mol\%)} =$$

$$(1000 - \text{Short-chain branching degree in 1000 carbons}) / 10$$

<Density (unit: $kg/m^3$)>

After annealing treatment described in JIS K6760-1995, the density of the ethylene-based polymer was measured according to Method A in JIS K7112-1980.

<Melt flow rate (MFR, unit: g / 10 minutes)>

The MFR of the ethylene-based polymer was measured according to JIS K7210-1-2014 at a temperature of 190 °C and a load of 2.16 kg.

Methods for measuring various physical properties of the propylene-based polymer are as follows:

<Melt flow rate (MFR, unit: g / 10 minutes)>

The MFR of the propylene-based polymer was measured according to JIS K7210-1-2014 at a temperature of 230 °C and a load of 2.16 kg.

<Isotactic pentad fraction ([mmmm], unit: mol%)>

The isotactic pentad fraction of the propylene-based polymer was quantified using the signal of the carbon atoms of the methyl group measured with $^{13}$C-NMR (manufactured by BRUKER, trade name "EX-270"). The NMR measurement was performed at 135 °C, using a measurement sample obtained by having the propylene-based polymer dissolved in deuterated o-dichlorobenzene (concentration: 100 mg/mL).

<Limiting viscosity ([η], unit: dL/g)>

The reduced viscosities of tetralin solutions of the propylene-based polymer respectively having concentrations of 0.1 g/dL, 0.2 g/dL, and 0.5 g/dL were measured at 135 °C, using an Ubbelohde type viscometer.
The limiting viscosity was obtained by the calculation method found in Section 491 of "Koubunshi Youeki: Koubunshi Jikken-gaku 11 (lit.: "Polymer Solution: Polymer Experimental Studies 11")" (published by KYORITSU SHUPPAN CO., LTD. in 1982), that is, by the extrapolation method in which the reduced viscosities of the tetralin solutions of the propylene-based polymer were plotted relative to the concentrations to extrapolate the concentrations to zero.

The materials used in Examples and Comparative Examples are as follows:

<Ethylene-based polymer>

- Ethylene-based polymer 1

Ethylene-α-olefin copolymer (manufactured by KEIYO POLYETHYLENE CO., LTD., trade name "G2500"), structural unit derived from ethylene: 99.2 mol%, MFR: 5 g / 10 minutes, density: 960kg/$m^3$

<Propylene-based polymer>

- Propylene-based polymer 1

Propylene homopolymer (manufactured by SUMITOMO CHEMICAL COMPANY, LIMITED, trade name: "NOBLEN W101"); MFR: 9 g / 10 minutes, [mmmm]: 97.5 mol%, [η]: 1.6 dL/g

<Inorganic filler>

- Inorganic filler 1

Talc (manufactured by ASADA MILLING CO., LTD., trade name "JM620P"), median diameter (d50): 5 μm

<Lubricant>

- Lubricant 1: Zinc stearate (manufactured by ADEKA CORPORATION, trade name "ZNS-F")
- Lubricant 2: Magnesium stearate (manufactured by NOF CORPORATION)

Methods for measuring various physical properties of the resin composition are as follows:

<Ratio of ash content (Ash, unit: none)>

The resin composition in an amount of 10 to 20 g was heated to 800 °C in an electric furnace equipped with a deodorizing and smoke removing apparatus (manufactured by TT-Labo co., LTD., trade name "TSD-20C-Z") to subject the olefin-based polymer components to pyrolysis for an hour, followed by being cooled to room temperature. The ratio of the ash content to the resin composition was calculated from the obtained amount of ash (g) and the amount of the resin composition used (g).

<Reflection electron microscope image of cross section of pellet of resin composition>

The pellet of the resin composition was embedded in an epoxy resin, and then a measurement sample having an MD cross section was prepared using a cryomicrotome. The measurement sample was prepared using a glass knife at -100 °C. The measurement sample was fixed on the stage of the reflection electron microscope with carbon tape. Thereafter, the measurement sample was subjected to Pt-Pd deposition using an ion sputtering apparatus (manufactured by Hitachi High-Tech Corporation, trade name "E-1030"), and then a reflection electron microscope image was obtained using a reflection electron microscope (manufactured by Hitachi High-Tech Corporation, trade name "FE-SEM (SU8020)") under the following conditions:

Acceleration voltage: 5 kV

$$WD = 15.0 - 15.7 \text{ mm}$$

Emission current: 20 μA
Probe current: High YAGBSE detector
Observation magnification: 1,000×

<Filler dispersity (FD, unit: none)>

The reflection electron microscope image of the cross section of the pellet of the resin composition was loaded using image analysis software ("NS2K-Pro" manufactured by Nanosystem Corporation), thereafter an analytical range (entire range other than the scale bar) was designated, noise was removed using a median filter, and then binarization processing was performed by a discriminant analysis method to separate the image into bright and dark portions. The distances between the centers of gravity were measured for the bright portions of the obtained processed image to calculate a filler dispersity using the following equation: A lower filler dispersity value means higher filler dispersity.

$$\text{(Filler dispersity)} = \text{(Standard deviation of distances between centers of gravity of bright portions)} / \text{(Average distance between centers of gravity of bright portions)}$$

<Filler dispersity / Ratio of ash content (unit: none)>

The ratio of filler dispersity to the ratio of ash content was obtained. A lower ratio value means more uniform filler dispersion.

[Example 1: Preparation of resin composition 1]

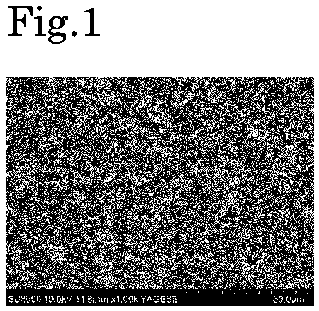

The inorganic filler 1 (60 mass parts) and the lubricant 1 (1.2 mass parts) were dry-blended under a nitrogen gas atmosphere to obtain a mixture. The obtained mixture (61.2 mass parts) and the propylene-based polymer 1 (40 mass parts) were mixed using a co-rotation twin screw extruder (manufactured by Ikegai Corp, trade name "Ikegai PCM45", 45 mmcp, LID 30), and then molten and kneaded at a screw rotation speed of 150 rpm at the temperatures of the cylinders set to 200 °C for C1 (cylinder 1); 210 °C for C2; 200 °C for C3 to C4; 210 °C for C5 to C7; and 190 °C for the die, in this order from the material feeding side, to obtain a resin composition 1 in the form of pellets. A reflection electron microscope image of the cross section of the pellet of the resin composition 1 is shown in Fig. 1.

[Example 2: Preparation of resin composition 2]

The inorganic filler 1 (60 mass parts) and the lubricant 1 (1.2 mass parts) were dry-blended under a nitrogen gas atmosphere to obtain a mixture. The obtained mixture (61.2 mass parts) and the ethylene-based polymer 1 were mixed using a co-rotation twin screw extruder (manufactured by Ikegai Corp, trade name "Ikegai PCM45", 45 mm$\varphi$, LID 30), and then molten and kneaded at a screw rotation speed of 150 rpm at the temperatures of the cylinders set to180 °C for C1; 190 °C for C2; 180 °C for C3 to C4; 190 °C for C5 to C7; and 170 °C for the die, in this order from the material feeding side, to obtain a resin composition 2 in the form of pellets.

[Examples 3 and 4: Preparation of resin compositions 3 and 4]

Resin compositions 3 and 4 were obtained in the same manner as in Example 2, except that the materials and the mixing ratio were changed to those shown in Table 1.

[Comparative Example 1: Preparation of resin composition C1]

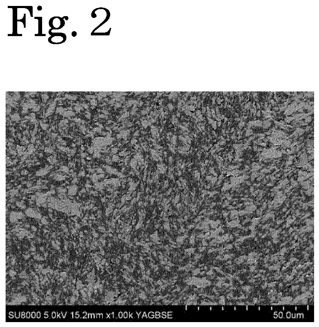

The propylene-based polymer 1 (40 mass parts), the inorganic filler 1 (60 mass parts), and the lubricant 1 (1.2 mass parts) were dry-blended under a nitrogen gas atmosphere. The obtained mixture (101.2 mass parts) was molten and kneaded using a co-rotation twin screw extruder (manufactured by Ikegai Corp, trade name "Ikegai PCM45", 45 mmcp, LID 30) at a screw rotation speed of 150 rpm at the temperatures of the cylinders set to 200 °C for C1; 210 °C for C2; 200 °C for C3 to C4; 210 °C for C5 to C7; and 190 °C for the die, in this order from the material feeding side, to obtain a resin composition C1 in the form of pellets. A reflection electron microscope image of the cross section of the pellet of the resin composition C1 is shown in Fig. 2.

[Comparative Example 2: Preparation of resin composition C2]

The ethylene-based polymer 1 (40 mass parts), the inorganic filler 1 (60 mass parts), and the lubricant 1 (1.2 mass parts) were dry-blended under a nitrogen gas atmosphere. The obtained mixture (101.2 mass parts) was molten and kneaded using a co-rotation twin screw extruder (manufactured by Ikegai Corp, trade name "Ikegai PCM45", 45 mm$\varphi$, LID 30) at a screw rotation speed of 150 rpm at the temperatures of the cylinders set to 180 °C for C1; 190 °C for C2; 180 °C for C3 to C4; 190 °C for C5 to C7; and 170 °C for the die, in this order from the material feeding side, to obtain a resin composition C2 in the form of pellets.

The materials and producing methods of the resin compositions of Examples and Comparative Examples are shown in Table 1. The measurement results of the physical properties of the resin compositions of Examples and Comparative Examples are shown in Table 2.

Table 1

| | Material | | | Producing method |
|---|---|---|---|---|
| | Olefin-based polymer | Inorganic filler | Lubricant | |
| Ex. 1 (Resin composition 1) | Propylene-based polymer 1 (40 mass parts) | Inorganic filler 1 (60 mass parts) | Lubricant 1 (1.2 mass parts) | Separate material feeding |
| Ex. 2 (Resin composition 2) | Ethylene-based polymer 1 (40 mass parts) | Inorganic filler 1 (60 mass parts) | Lubricant 1 (1.2 mass parts) | Separate material feeding |
| Ex. 3 (Resin composition 3) | Ethylene-based polymer 1 (55 mass parts) | Inorganic filler 1 (45 mass parts) | Lubricant 2 (1.2 mass parts) | Separate material feeding |
| Ex. 4 (Resin composition 4) | Ethylene-based polymer 1 (55 mass parts) | Inorganic filler 1 (45 mass parts) | Lubricant 1 (1.2 mass parts) | Separate material feeding |
| C. Ex. 1 (Resin composition C1) | Propylene-based polymer 1 (40 mass parts) | Inorganic filler 1 (60 mass parts) | Lubricant 1 (1.2 mass parts) | Batch material feeding |
| C. Ex. 2 (Resin composition C2) | Ethylene-based polymer 1 (40 mass parts) | Inorganic filler 1 (60 mass parts) | Lubricant 1 (1.2 mass parts) | Batch material feeding |

Table 2

| | Ratio of ash content | Filler dispersity | Filler dispersity / Ratio of ash content |
|---|---|---|---|
| Ex. 1 (Resin composition 1) | 0.576 | 0.50 | 0.86 |
| Ex. 2 (Resin composition 2) | 0.579 | 0.75 | 1.29 |
| Ex. 3 (Resin composition 3) | 0.424 | 0.46 | 1.09 |
| Ex. 4 (Resin composition 4) | 0.434 | 0.56 | 1.28 |
| C. Ex. 1 (Resin composition C1) | 0.577 | 1.00 | 1.73 |
| C. Ex. 2 (Resin composition C2) | 0.579 | 0.77 | 1.33 |

A method for evaluating a film formed using the resin composition is as follows:

<Number of micro-defects of film (number of FEs (fisheyes), unit: FEs/$m^2$)>

A film was cut into a piece of 300 mm $\times$ 120 mm to prepare a test piece for evaluating the number of micro-defects. Dark defects having a diameter (maximum diameter) of 0.2 mm or more that were present inside the film and on the film surface were measured using a digital defect inspection apparatus (manufactured by Mamiya-OP Co., Ltd., trade name "GX70LT"). The conditions for the inspection were: detection threshold: 30 or more, detection prohibition threshold: 24 or more, light source gain: 1.0, reading speed: 30 m/minute, lower limit size for detection: 4 pixels vertically and 2 pixels horizontally, average amount of transmitted light: 70%, and measurement range: 120 mm vertically $\times$ 100 mm horizontally.

[Test Example 1: Preparation of cast film 1]

The resin composition 1 (50 mass parts) and the propylene-based polymer 1 (50 mass parts) were dry-blended to prepare a mixture having a content of the filler of 30 mass%. The obtained mixture was used to prepare a cast film 1 having a thickness of 15 $\mu$m using a cast film molding machine (manufactured by Sumitomo Heavy Industries Modern, Ltd., a single-screw extruder with a full flight type screw (diameter of 20 mm$\varphi$, L/D = 26), circular dies (die diameter of 75 mm$\varphi$, rip gap of 1 mm)) at a processing temperature of 230 °C and a chill roll temperature of 50 °C at an extrusion amount of 12.5 kg/hr.

[Test Example 2: Preparation of cast film]

The resin composition 2 (50 mass parts) and the ethylene-based polymer 1 (50 mass parts) were dry-blended to prepare a mixture having a content of the filler of 30 mass%. The obtained mixture was used to prepare a cast film 2 having a thickness of 15 $\mu$m using a cast film molding machine (manufactured by Sumitomo Heavy Industries Modern, Ltd., single-screw extruder with a full flight type screw (diameter of 20 mm$\varphi$, L/D = 26), circular dies (die diameter of 75 mm$\varphi$, rip gap of 1 mm)) at the temperatures of the cylinders set to 160 °C for C1; 170 °C for C2; 180 °C for C3; and 180 °C for the die, in this order from the material feeding side, and a chill roll temperature of 50 °C at an extrusion amount of 12.5 kg/hr.

[Test Examples 3-5: Preparation of cast films 3-5]

Cast films 3 to 5 were prepared in the same manner as in Test Example 2, except that the materials and the mixing ratio were changed to those shown in Table 3.

[Test Example C1: Preparation of cast film C1]

A cast film C1 was prepared in the same manner as in Test Example 1, except that the materials were changed to those shown in Table 3.

[Test Examples C2 and C3: Preparation of cast films C2 and C3]

Cast films C2 and C3 were prepared in the same manner as in Test Example 2, except that the materials and the mixing ratio were changed to those shown in Table 3.

The materials, the filler contents, and the results of FEs for the Test Examples are shown in Table 3.

Table 3

| | Material | | Filler content (mass %) | FEs (FEs /m$^2$) |
|---|---|---|---|---|
| Test Ex. 1 (Cast film 1) | Resin composition 1 (50 mass parts) | Propylene-based polymer 1 (50 mass parts) | 30 | 287 |
| Test Ex. 2 (Cast film 2) | Resin composition 2 (50 mass parts) | Ethylene-based polymer 1 (50 mass parts) | 30 | 165 |
| Test Ex. 3 (Cast film 3) | Resin composition 2 (25 mass parts) | Ethylene-based polymer 1 (75 mass parts) | 15 | 0 |
| Test Ex. 4 (Cast film 4) | Resin composition 3 (67 mass parts) | Ethylene-based polymer 1 (33 mass parts) | 30 | 146 |
| Test Ex. 5 (Cast film 5) | Resin composition 4 (67 mass parts) | Ethylene-based polymer 1 (33 mass parts) | 30 | 209 |
| Test Ex. C1 (Cast film C1) | Resin composition C1 (50 mass parts) | Propylene-based polymer 1 (50 mass parts) | 30 | 561 |
| Test Ex. C2 (Cast film C2) | Resin composition C2 (50 mass parts) | Ethylene-based polymer 1 (50 mass parts) | 30 | 367 |
| Test Ex. C3 (Cast film C3) | Resin composition C2 (25 mass parts) | Ethylene-based polymer 1 (75 mass parts) | 15 | 27 |

As can be seen from the results in Table 3, the cast film formed using the resin composition of each of Examples 1 to 4 that each fulfill all the requirements of the present invention has a fewer FEs and a more excellent appearance than the cast film formed using the resin composition of each of Comparative Examples that each have the same filler content as that of each of Examples.

Industrial Applicability

According to the present invention, it is possible to provide a method for producing a resin composition capable of obtaining a film including a filler and excellent in appearance, and a resin composition.

**Claims**

1. A method for producing a resin composition comprising: an olefin-based polymer; an inorganic filler; and a lubricant, wherein

    the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg,
    the method comprising:

       a step (1) of mixing the inorganic filler and the lubricant;
       a step (2) of mixing a mixture obtained in the step (1) and the olefin-based polymer; and
       a step (3) of kneading a mixture obtained in the step (2).

2. The method for producing the resin composition according to claim 1, wherein a content of the inorganic filler included in the resin composition is 20 mass parts to 80 mass parts, based on 100 mass parts of a total of the content of the olefin-based polymer and the content of the inorganic filler.

3. The method for producing the resin composition according to claim 1 or 2, wherein a content of the lubricant included in the resin composition is 0.01 mass part to 5 mass parts, based on 100 mass parts of a total of the content of the olefin-based polymer and the content of the inorganic filler.

4. The method for producing the resin composition according to any one of claims 1 to 3, wherein the inorganic filler is talc.

5. The method for producing the resin composition according to any one of claims 1 to 4, wherein the lubricant is a metallic soap.

6. The method for producing the resin composition according to any one of claims 1 to 5, wherein the metallic soap is any one of zinc stearate and magnesium stearate.

7. The method for producing the resin composition according to any one of claims 1 to 6, wherein the olefin-based polymer is the ethylene-based polymer.

8. A resin composition comprising: an olefin-based polymer; an inorganic filler; and a lubricant, wherein

    the olefin-based polymer is at least one polymer selected from the group consisting of a propylene-based polymer, and an ethylene-based polymer having a melt flow rate of 0.5 g / 10 minutes or more measured at a temperature of 190 °C and a load of 2.16 kg,
    the resin composition satisfying a formula (i) below:

$$0.10 \leq FD/Ash \leq 1.30 \ (i)$$

    (where:

       FD represents a filler dispersity calculated by a formula (ii) below.
       Ash represents a ratio of ash content to the resin composition.)

$$FD = D2 / D1 \ (ii)$$

    (where:

       D1 represents an average value of distances between centers of gravity of bright portions of a processed image obtained by binarization processing of a reflection electron microscope image in MD cross section of the resin composition.
       D2 represents a standard deviation of the distances between the centers of gravity of the bright portions of the processed image obtained by binarization processing of the reflection electron microscope image in MD cross section of the resin composition.)

Fig.1

Fig. 2

SU8000 5.0kV 15.2mm x1.00k YAGBSE                    50.0um

## INTERNATIONAL SEARCH REPORT

| International application No. |
|---|
| **PCT/JP2021/045958** |

| **A.** | **CLASSIFICATION OF SUBJECT MATTER** |
|---|---|

*C08J 3/20*(2006.01)i; *C08K 3/013*(2018.01)i; *C08K 3/34*(2006.01)i; *C08K 5/098*(2006.01)i; *C08K 9/04*(2006.01)i; *C08L 23/00*(2006.01)i
FI:  C08J3/20 B CES; C08K3/013; C08K3/34; C08K5/098; C08K9/04; C08L23/00

According to International Patent Classification (IPC) or to both national classification and IPC

| **B.** | **FIELDS SEARCHED** |
|---|---|

Minimum documentation searched (classification system followed by classification symbols)

C08J3/00-3/28; C08K; C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 5-132579 A (SHOWA DENKO KK) 28 May 1993 (1993-05-28)<br>claims, paragraphs [0009]-[0011], [0016], examples, comparative examples, Effect of the invention | 1-8 |
| X | JP 2-105835 A (PURIYUUSU SHIYUTAUFUERU AG) 18 April 1990 (1990-04-18)<br>claims, examples | 1-8 |
| X | JP 63-23945 A (HARIMA CHEMICALS INC) 01 February 1988 (1988-02-01)<br>claims, Industrial application field, examples | 1-4, 7, 8 |
| A | | 5, 6 |
| X | JP 60-32841 A (IDEMITSU SEKIYU KAGAKU KK) 20 February 1985 (1985-02-20)<br>claims, examples | 1-4, 7, 8 |
| A | | 5, 6 |
| A | WO 2000/36008 A1 (SEKISUI CHEMICAL CO., LTD.) 22 June 2000 (2000-06-22)<br>claims, examples | 1-8 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 289 885 A1**

## INTERNATIONAL SEARCH REPORT

| International application No. |
|---|
| **PCT/JP2021/045958** |

### C. DOCUMENTS CONSIDERED TO BE RELEVANT

| Category* | Citation of document, with indication, where appropriate, of the relevant passages | Relevant to claim No. |
|---|---|---|
| A | JP 10-53724 A (ECC INTERNATL LTD) 24 February 1998 (1998-02-24) claims, examples | 1-8 |
| A | JP 58-96637 A (TOKUYAMA SODA KK) 08 June 1983 (1983-06-08) claims, examples | 1-8 |
| A | JP 7-252389 A (NIPPON UEEBLOCK KK) 03 October 1995 (1995-10-03) claims, examples | 1-8 |
| A | JP 2018-529009 A (DOW GLOBAL TECHNOLOGIES LLC) 04 October 2018 (2018-10-04) claims, examples | 1-8 |
| A | JP 2018-159009 A (TOYOTA AUTO BODY CO LTD) 11 October 2018 (2018-10-11) claims, examples | 1-8 |
| A | JP 11-5852 A (GRAND POLYMER KK) 12 January 1999 (1999-01-12) claims, examples | 1-8 |
| A | JP 3-231947 A (SAKAI CHEM IND CO LTD) 15 October 1991 (1991-10-15) claims, examples | 1-8 |
| A | JP 2005-161696 A (SUMITOMO CHEMICAL CO LTD) 23 June 2005 (2005-06-23) entire text | 1-8 |

Form PCT/ISA/210 (second sheet) (January 2015)

19

**INTERNATIONAL SEARCH REPORT**
Information on patent family members

International application No.

**PCT/JP2021/045958**

| Patent document cited in search report | | | Publication date (day/month/year) | Patent family member(s) | | | Publication date (day/month/year) |
|---|---|---|---|---|---|---|---|
| JP | 5-132579 | A | 28 May 1993 | (Family: none) | | | |
| JP | 2-105835 | A | 18 April 1990 | EP claims, examples DE | 355808 3927861 | A2 A | |
| JP | 63-23945 | A | 01 February 1988 | (Family: none) | | | |
| JP | 60-32841 | A | 20 February 1985 | (Family: none) | | | |
| WO | 2000/36008 | A1 | 22 June 2000 | EP claims, examples CA CN | 1197519 2353065 1330685 | A1 A A | |
| JP | 10-53724 | A | 24 February 1998 | US claims, examples GB EP AU KR | 5880177 9611701 811654 2373597 10-1998-0002128 | A A A1 A A | |
| JP | 58-96637 | A | 08 June 1983 | (Family: none) | | | |
| JP | 7-252389 | A | 03 October 1995 | (Family: none) | | | |
| JP | 2018-529009 | A | 04 October 2018 | US claims, examples WO EP CN KR | 2018/0265650 2017/049064 3350258 107949602 10-2018-0055837 | A1 A1 A1 A A | |
| JP | 2018-159009 | A | 11 October 2018 | (Family: none) | | | |
| JP | 11-5852 | A | 12 January 1999 | (Family: none) | | | |
| JP | 3-231947 | A | 15 October 1991 | (Family: none) | | | |
| JP | 2005-161696 | A | 23 June 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003171472 A
- JP H11322833 A
- JP H9183816 A

**Non-patent literature cited in the description**

- *Resource Circulation Strategy for Plastics,* May 2019
- Koubunshi Youeki: Koubunshi Jikken-gaku 11 (lit.: ''Polymer Solution: Polymer Experimental Studies 11). KYORITSU SHUPPAN CO., LTD, 1982